# EUROPEAN PATENT APPLICATION

(11) **EP 4 811 484 A1**
(43) Date of publication of application: **23.09.2026**
(21) Application number: 25873845.9
(22) Date of filing: 20.08.2025
(51) Int. Cl.: H01M 10/058, H01M 4/04, H01M 4/66, H01M 10/42, H01M 10/0566

(54) **METHOD FOR MANUFACTURING SECONDARY BATTERY**

(30) Priority: 26.09.2024 KR 20240130867
(71) Applicant: LG Energy Solution, Ltd., Seoul 07335 (KR)
(72) Inventor: HWANG, Sunwook, Daejeon 34122 (KR); LEE, Eunji, Daejeon 34122 (KR); KIM, Dong Kyu, Daejeon 34122 (KR)
(74) Representative: BCKIP Part mbB
(86) International application number: PCT/KR2025/012620
(87) International publication number: WO 2026/071484

(57) **Abstract**

A method for manufacturing a secondary battery according to the present disclosure comprises: providing a slurry containing an active material, applying the slurry onto a substrate, drying and rolling it to form an electrode layer having a first thickness, preparing an electrolyte solution, applying the electrolyte solution to the electrode layer, measuring the time required from the point of time when the electrolyte solution is dropped onto the electrode layer to the point of time when the electrolyte solution passes through the electrode layer and appears on the substrate, and determining whether or not to apply the electrolyte solution, taking into consideration the required time, when the electrode layer having the first thickness is formed on a current collector using the slurry to apply and cure the electrolyte solution thereto.

## Description

### [TECHNICAL FIELD]

### Cross Citation with Related Application(s)

This application claims priority to and the benefit of Korean Patent Application No. 10-2024-0130867, filed on September 26, 2024, the disclosure of which is incorporated herein by reference in its entirety.

The present disclosure relate to a method for manufacturing a secondary battery, and more particularly, to a method for manufacturing a secondary battery that measures the time required for an electrolyte solution to be impregnated into an electrode and reflects the same in the manufacturing process.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, hardly exhibiting memory effects compared to nickel-based secondary batteries and thus being freely charged and discharged, and having very low self-discharge rate and high energy density.

Such secondary batteries are manufactured by impregnating an electrode assembly, including a positive electrode, a negative electrode and a separator with an electrolyte solution. In this case, the electrode assembly is sufficiently impregnated with the electrolyte solution, thereby allowing the battery to achieve excellent performance. In recent years, as high-capacity and high-power secondary batteries are studied, it is important that the electrolyte solution is rapidly impregnated into the electrode assembly in the manufacture of a secondary battery. When the impregnation property of the electrolyte solution decreases, the electrolyte solution cannot reach the active material particles in the electrode plates, which impedes the smooth movement of lithium ions and consequently reduces the current. Further, when the impregnation speed of the electrolyte solution decreases, the productivity of secondary batteries declines.

Therefore, a method that can accurately evaluate the impregnation property of the electrolyte solution is needed, and in particular, a method of evaluating electrolyte solution impregnation property that reflects the structure in which the electrolyte solution is actually impregnated into an electrode is needed. Conventionally, a method has been used in which an electrode assembly was housed in a battery case such as a pouch or a can, and then an electrolyte solution was injected into the battery case to impregnate it. However, in recent years, a method has been developed for manufacturing secondary batteries in which the electrolyte solution is impregnated by applying it onto the electrode assembly rather than being injected into it. Therefore, there is a need to develop a method for evaluating electrolyte solution impregnation property that reflects this battery manufacturing method.

### [DETAILED DESCRIPTION OF THE INVENTION[]

### [Technical Problem]

It is an object of the present disclosure to provide a method for manufacturing a secondary battery which comprises applying an electrolyte solution to an electrode, followed by impregnation and curing, thereby evaluating the impregnation property of the electrolyte solution in advance and reflecting same.

However, the technical objects to be solved by embodiments of the present disclosure are not limited to the above-described objects, and can be variously expanded within the scope of the technical idea included in the present disclosure.

### [Technical Solution]

According to an aspect of the present disclosure, there is provided a method for manufacturing a secondary battery, the method comprising the steps of: providing a slurry containing an active material; applying the slurry onto a substrate, drying and rolling it to form an electrode layer having a first thickness; preparing an electrolyte solution; applying the electrolyte solution to the electrode layer; measuring the time required from the point of time when the electrolyte solution is dropped onto the electrode layer to the point of time when the electrolyte solution passes through the electrode layer and appears on the substrate; and determining whether or not to apply the electrolyte solution, taking into consideration the required time, when the electrode layer having the first thickness is formed on a current collector using the slurry to apply and cure the electrolyte solution thereto.

In an embodiment, the determining step may be determining to apply the electrolyte solution if the required time is within 30 minutes, and determining not to apply the electrolyte solution if the required time exceeds 30 minutes.

In an embodiment, if it is determined to apply the electrolyte solution in the step of determining whether to apply the electrolyte solution, the method may comprise: forming the electrode layer having the first thickness on the current collector using the slurry; applying the electrolyte solution onto the electrode layer; waiting for the required time; and curing the electrode layer to which the electrolyte solution has been applied.

In an embodiment, the step of measuring the required time may further comprise calculating the impregnation speed of the electrolyte solution using the following Equation 1: $Impregnation speed \left(μm/sec\right) = Electrode layer thickness \left(μm\right) / Required time \left(sec\right) .$

In an embodiment, the substrate may be a transparent substrate.

In an embodiment, the substrate may comprise polypropylene (PP) or polyethylene (PE).

In an embodiment, the step of applying the electrolyte solution to the electrode layer may comprise rolling a surface of the electrode layer with a roller.

In an embodiment, the curing step may utilize a UV curing or a thermal curing.

In an embodiment, the electrolyte solution may be non-volatile.

In an embodiment, the electrolyte solution may be a liquid electrolyte.

In an embodiment, the slurry may comprise a positive electrode active material, a binder, and a conductive material.

In an embodiment, the slurry may comprise a negative electrode active material, a binder, and a conductive material.

In an embodiment, the first thickness may be 10 µm or more and 1000 µm or less.

### [Advantageous Effects]

According to specific embodiments, the method for manufacturing a secondary battery of the present disclosure reflects a structure in which an electrolyte solution is actually impregnated into the electrode, thereby evaluating the impregnation property of the electrolyte solution and applying the same to the process, and consequently improving productivity.

The effects of the present disclosure are not limited to the effects mentioned above, and additional other effects not described above will be clearly understood from the description of the appended claims by those skilled in the art.

### [BRIEF DESCRIPTION OF THE DRAWINGS]

FIG. 1 is a flowchart illustrating a method for manufacturing a secondary battery according to an embodiment of the present disclosure.
FIG. 2 illustrates a step of applying an electrolyte solution to an electrode layer according to an embodiment of the present disclosure.
FIG. 3 illustrates a step of applying an electrolyte solution to an electrode layer according to an embodiment of the present disclosure.
FIG. 4 illustrates a step of applying an electrolyte solution to an electrode layer according to an embodiment of the present disclosure.
FIG. 5 illustrates a step of applying an electrolyte solution to an electrode layer according to an embodiment of the present disclosure.
FIG. 6 illustrates a step of curing the electrode layer to which the electrolyte solution has been applied according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the figures, the size and thickness of each element are arbitrarily illustrated for convenience of description, and the present disclosure is not necessarily limited to those illustrated in the figures. In the figures, the thickness of layers, regions, etc. are exaggerated for clarity. In the figures, for convenience of description, the thicknesses of some layers and regions are exaggerated.

Further, when a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity. Meanwhile, similar to the case where it is described as being located "on" or "above" another part, the case where it is described as being located "below" or "under" another part will also be understood with reference to the above-mentioned contents.

Further, throughout the specification, when a portion is referred to as "including" a certain component, it means that the portion can further include other components, without excluding the other components, unless otherwise stated.

Further, the term "degree of impregnation" as used herein refers to the extent to which the electrolyte solution penetrates into the interior of the electrode layer, and may have the same meaning as terms such as impregnation property, wettability, impregnation speed, absorbency, and absorption speed.

Now, a method for manufacturing a secondary battery according to an embodiment of the present disclosure will be described.

A method for manufacturing a secondary battery according to the present disclosure comprises:
a step of providing a slurry containing an active material;
a step of applying the slurry onto a substrate, drying and rolling it to form an electrode layer having a first thickness;
a step of preparing an electrolyte solution;
a step of applying the electrolyte solution to the electrode layer;
a step of measuring the time required from the point of time when the electrolyte solution is dropped onto the electrode layer to the point of time when the electrolyte solution passes through the electrode layer and appears on the substrate; and
a step of determining whether or not to apply the electrolyte solution, taking into consideration the required time, when the electrode layer having the first thickness is formed on the current collector using the slurry to apply and cure the electrolyte solution thereto.

The method for manufacturing a secondary battery according to the present disclosure includes methods for manufacturing a lithium metal secondary battery, a lithium ion secondary battery, a lithium polymer secondary battery, a lithium ion polymer secondary battery or the like.

Conventionally, a secondary battery was manufactured by inserting an electrode assembly into a case of a predetermined size and shape and then injecting an electrolyte solution into the case.

However, in the present disclosure, the secondary battery can be manufactured by a method in which an electrode assembly including a positive electrode, a negative electrode, and a separator is produced, an electrolyte solution is directly applied to the electrode assembly and impregnated, and then cured. Reflecting such processes, in the method for manufacturing a secondary battery of the present disclosure, in order to evaluate the degree of impregnation of an electrolyte solution in advance, the impregnation property of an electrolyte solution was evaluated in the same manner as the method by which the electrolyte solution is impregnated into the electrode.

Further, the electrode assembly used in the secondary battery includes electrodes, such as a positive electrode or a negative electrode, wherein the electrodes can be classified into a monopolar electrode in which active materials having the same polarity are coated onto both surfaces of a current collector, and a bipolar electrode in which active materials having different polarities are coated onto both surfaces of a current collector.

A bipolar electrode is formed by coating a positive electrode active material onto one surface of the current collector and coating a negative electrode active material onto the other surface of the current collector, with the current collector interposed therebetween. Typically, in the manufacture of a bipolar battery, a separator and a bipolar electrode are alternately stacked, and both ends of the separator and the bipolar electrode are sealed with a sealing layer. In an embodiment, in the case of an electrode assembly to which a bipolar electrode is applied, a secondary battery can be manufactured by a method in which an electrolyte solution is directly applied to the electrodes of the electrode assembly, allowed to impregnate, and then cured. In particular, in a bipolar battery, the electrolyte solution may be impregnated from the positive electrode to the current collector, or may be impregnated from the negative electrode to the current collector.

Thus, the present application has invented a method comprising preparing an electrode and a substrate corresponding to the electrode and current collector, directly applying an electrolyte solution to the electrode at such a semi-finished product level, and then evaluating the impregnation property of the electrolyte solution.

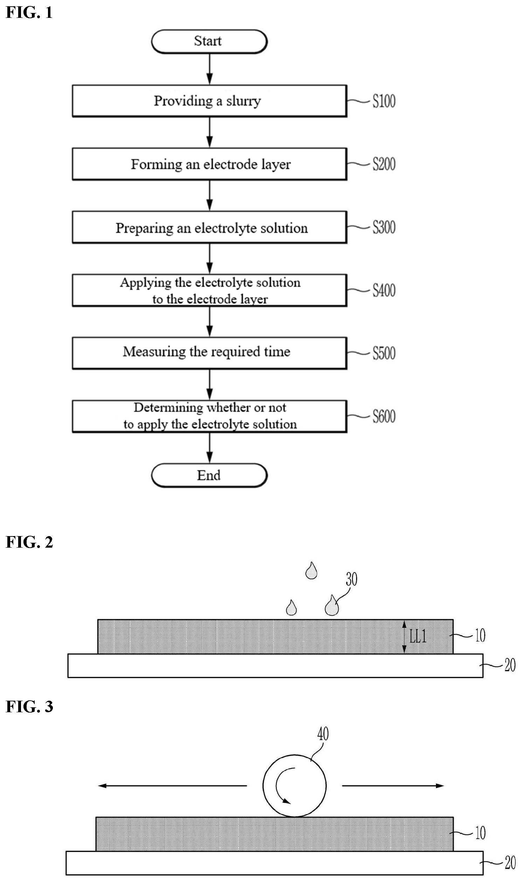

FIG. 1 is a flowchart illustrating a method for manufacturing a secondary battery according to an embodiment of the present disclosure.

Referring to FIG. 1, the method for manufacturing a secondary battery according to an embodiment comprises: a step (S100) of providing a slurry, a step (S200) of forming an electrode layer, a step (S300) of preparing an electrolyte solution, a step (S400) of applying the electrolyte solution to the electrode layer, a step (S500) of measuring the required time, and a step (S600) of determining whether or not to apply the electrolyte solution.

Specifically, the step (S100) of providing a slurry is a step of providing a slurry containing an active material. The slurry may be a slurry for a secondary battery electrode, or may be a slurry for a positive electrode or a slurry for a negative electrode.

The slurry may be prepared by mixing an active material, a binder, and a conductive material in a solvent. The active material may be a positive electrode active material or a negative electrode active material.

As the positive electrode active material, a compound known in the art as being capable of reversible intercalation and deintercalation of lithium may be used without limitation.

Specifically, the positive electrode active material may be a lithium composite metal oxide containing lithium and one or more metals such as cobalt, manganese, nickel, or aluminum.

Specifically, examples of the lithium composite metal oxide may include lithium-iron-phosphorus-based oxide (e.g., Li₁₊ₐFe₁₋ₛMₛ(PO_{4-b})X_{b} (where M is one or more elements selected from Co, Ni, Al, Mg, Ti, and V, X is F, S, or N, and -0.5≤a≤+0.5, 0≤b≤0.1, 0≤s≤0.5), etc.), lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn₂-_{Z1}Co_{Z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal(M) oxide (e.g., Li(Niₚ₂Co_{q2}Mnᵣ₃M_{S2})O₂ (where M is selected from the group consisting of Al, Fe, V, Cr, Ti, Ta, Mg, and Mo, and p2, q2, r3, and s2 are atomic fractions of each independent elements, wherein 0<p2<1, 0<q2<1, 0<r3<1, 0<s2<1, and p2+q2+r3+s2=1), etc.).

As the negative electrode active material, a compound capable of reversible intercalation and deintercalation of lithium may be used. Specific examples thereof may include a carbonaceous material such as artificial graphite, natural graphite, graphitized carbon fiber or amorphous carbon, one or more carbon-based materials selected from the group consisting of carbon black, acetylene black, ketjen black, super P, graphene, and fibrous carbon, Si-based materials, metal composite oxides such as LixFe₂O₃(0≤x≤1), LixWO₂(0≤x≤1) and SnₓMe₁₋ₓMe'_{y}O_{z} (Me: Mn, Fe, Pb, Ge; Me': Al, B, P, Si, Group 1, 2, and 3 elements of the periodic table, and halogens; 0<x≤1; 1≤y≤3; 1≤z≤8); lithium metal; metals such as Al, Cu, Ge, Si and Sn; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; or lithium titanium oxide, and the like, but are not limited to thereto as long as they are known in the art.

The binder is used to enhance a bonding force between the active material and the conductive material, as well as a bonding force to the current collector described below.

Non-limiting examples of the binder include polyvinylidene fluoride(PVDF), polytetrafluoroethylene(PTFE), polyvinyl alcohol(PVA), polyacrylic acid(PAA), polymethacrylic acid(PMA), polymethyl methacrylate(PMMA), polyacrylamide(PAM), polymethacrylamide, polyacrylonitrile(PAN), polymethacrylonitrile, polyimide(PI), alginic acid, alginate, chitosan, carboxymethylcellulose(CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber(SBR), fluorine rubber, various copolymers thereof, and the like.

The conductive material is used to further improve the conductivity of the active material. The conductive material is not particularly limited as long as it has conductivity without causing chemical changes in the battery, and for example, graphite such as natural graphite or artificial graphite; carbon black such as carbon black, acetylene black, ketjen black, channel black, furnace black, lamp black, and thermal black; carbon-based materials such as carbon fibers, single-walled carbon nanotubes, and multi-walled carbon nanotubes; metal powder or metal fiber, such as copper, nickel, aluminum, or silver; conductive fibers; conductive whiskers such as zinc oxide or potassium titanate; conductive metal oxides such as titanium oxide; or conductive polymers such as polyphenylene derivatives may be used.

The solvent may generally comprise an organic solvent or an aqueous solvent. For example, as the organic solvent, one kind or a mixture of two kinds or more selected from the group consisting of N-methyl-2-pyrrolidone(NMP), methoxy propyl acetate, butyl acetate, glycol acid, butyl ester, butyl glycol, methyl alkyl polysiloxane, alkylbenzene, propylene glycol, xylene, monophenyl glycol, aralkyl modified methylalkyl polysiloxane, polyether modified dimethyl polysiloxane copolymer, polyacrylate solution, alkylbenzene, diisobutyl ketone, organic modified polysiloxane, butanol, isobutanol, modified polyacrylate, modified polyurethane, and polysiloxane-modified polymer may be preferably used. Further, water may be used as the aqueous solvent.

Additionally, the slurry may comprise other additives, such as, for example, fillers as components that suppress expansion, or may further comprise dispersants to enhance the dispersion efficiency of the conductive material. The filler and the dispersant may be used without particular limitation, as long as they are commonly used in slurries for secondary battery electrodes.

Next, a step (S200) of forming an electrode layer, a step (S300) of preparing an electrolyte solution, and a step (S400) of applying the electrolyte solution to the electrode layer are carried out.

The step (S200) of forming an electrode layer is a step of applying the aforementioned slurry onto a substrate, drying and rolling it to form an electrode layer.

The drying step and the rolling step can be carried under the same conditions as in the actual electrode manufacturing process. For example, the drying step can be carried out by vacuum drying at a temperature ranging from 50°C to 120°C for 1 to 24 hours for the positive electrode, and at a temperature ranging from 60°C to 150°C for 2 to 48 hours for the negative electrode. The rolling step can be carried out at a temperature ranging from 0°C to 120°C and under a pressure of 10 MPa to 100 MPa, specifically 20 MPa to 60 MPa.

Further, the rolling step may be carried out taking into consideration the actual porosity of the electrode. The electrode layer after completion of rolling may have a porosity of 18 vol% to 30 vol% and a density of 1 g/cc to 4.5 g/cc. For example, if the slurry contains a positive electrode active material, the electrode layer may have a porosity of 18 vol% to 30 vol% and a density of 3.4 g/cc to 4.2 g/cc. Alternatively, when the slurry contains a negative electrode active material, the electrode layer may have a porosity of 20 vol% to 30 vol% and a density of 1.3 g/cc to 1.8 g/cc. However, the conditions of the drying and rolling steps are not limited thereto.

The step (S300) of preparing an electrolyte solution may be a step of preparing a liquid electrolyte, and specifically, a liquid electrolyte containing an organic solvent and a lithium salt may be prepared.

The organic solvent can be used without any particular limitation, as long as it can serve as a medium through which ions involved in the electrochemical reactions of the battery can migrate, but it is preferable to use a non-volatile solvent.

The lithium salt may be used without particular limitation as long as it is a compound capable of providing lithium ions used in lithium secondary batteries. The lithium salts are used as a medium for transferring ions within the lithium battery. For example, lithium salts may contain Li⁺ as cation, and may contain together an anion selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

The step (S400) of applying the electrolyte solution to the electrode layer is a step of applying an electrolyte solution to the electrode layer prepared above.

FIGS. 2 and 3 illustrate a step of applying an electrolyte solution to an electrode layer according to an embodiment of the present disclosure.

Referring to FIG. 2, the aforementioned slurry is applied onto a substrate 20, dried, and rolled to form an electrode layer 10. The electrode layer 10 may be prepared taking into consideration the thickness of the electrode actually manufactured in the process. The thickness LL1 of the electrode layer 10 may be a first thickness, wherein the first thickness may be 10 µm or more and 1000 µm or less, preferably 10 µm or more and 200 µm or less, but the embodiment is not limited thereto.

The electrolyte solution 30 is applied onto an upper surface of the electrode layer 10. The amount of the electrolyte solution 30 applied may be 1 *µ*ℓ or more, for example, 1 *µ*ℓ to 10 *µ*ℓ, or specifically, 1 *µ*ℓ to 5 *µ*ℓ. When the electrolyte solution 30 is dropped in an amount of less than 1 *µ*ℓ, it may be difficult to observe the point of time when the electrolyte solution 30 reaches. Even if the dropping amount of the electrolyte solution 30 exceeds 10 *µ*ℓ, it does not significantly affect the impregnation time of an electrolyte solution.

Referring to FIG. 3, the step (S400) of applying the electrolyte solution onto the electrode layer may include a step of rolling the surface of the electrode layer 10 with a roller 40. As the electrode layer 10 is rolled with the roller 40, the applied electrolyte solution 30 (see FIG. 2) may be evenly dispersed over the surface of the electrode layer 10. Specifically, the entire surface of the electrode layer 10 may be rolled with the roller 40 approximately one to three times. Further, the pressure strength of the roller 40 is not particularly limited, and can be adjusted in accordance with the physical properties of the electrode layer. However, the step of rolling the surface of the electrode layer 10 with the roller 40 may be omitted.

Once the electrolyte solution 30 is applied, the step (S500) of measuring the required time is carried out.

The step S500 of measuring the required time is a step of measuring the time required from the point of time when the electrolyte solution 30 is dropped onto the electrode layer 10 to the point of time when the electrolyte solution 30 passes through the electrode layer 10 and appears on the substrate 20.

The step S500 of measuring the required time may be carried out by visual confirmation or measurement. Here, the expression "visual confirmation or measurement" refers to direct confirmation with the observer's eyes, or indirect confirmation via a medium such as a lens, camera, or microscope between the object to be analyzed and the observer.

The substrate 20 may be made of a transparent material so as to visually confirm or measure that the electrolyte solution 30 passes through the electrode layer 10 and appears on the substrate 20. Further, the substrate 20 is preferably made of a material that can withstand the pressure applied during the rolling process of the electrode layer 10. For example, the substrate 20 may include polypropylene(PP) or polyethylene(PE), but the embodiment is not limited thereto.

Meanwhile, the step (S500) of measuring the required time may further include a step of calculating the impregnation speed of the electrolyte solution 30 using the following Equation 1. $Impregnation speed \left(μm/sec\right) = Electrode layer thickness \left(μm\right) / Required time \left(sec\right) .$

Subsequently, the step (S600) of determining whether to apply the electrolyte solution is carried out.

The step (S600) of determining whether to apply the electrolyte solution is a step of evaluating the impregnation property of the electrolyte solution 30 and determining whether to use the electrolyte solution 30 in the actual process.

Specifically, in an actual process, when forming an electrode layer having the first thickness using the slurry on a current collector and applying and curing the electrolyte solution thereon, it is possible to determine whether or not to apply the electrolyte solution taking into consideration the required time measured above. In another embodiment, the impregnation speed calculated from Equation 1 may be considered instead of the required time.

Specifically, the step (S600) of determining whether to apply the electrolyte solution is a step of determining to apply the electrolyte solution if the required time is within 30 minutes, and determining not to apply the electrolyte solution if the required time exceeds 30 minutes. Specifically, the required time may be a maximum of 60 seconds to 30 minutes. The required time may vary depending on whether or not to use the roller 40 described above or the pressure strength of the roller 40. If the required time exceeds 30 minutes, there is a risk of denaturing the electrolyte solution.

Since the method of manufacturing a secondary battery of the present disclosure involves a process of applying the electrolyte solution to the electrode and then curing it, the time required for the electrolyte solution to be impregnated is preferably within 30 minutes. The required time can be measured in advance in a semi-finished product state to determine whether to use the electrolyte solution.

Further, in the step (S600) of determining whether to apply the electrolyte solution, the required time for the electrolyte solution can be measured in advance and compared for each electrolyte solution or electrode, which can also then be applied to the electrode design (porosity, electrode structure).

The method for manufacturing a secondary battery of the present disclosure may further comprise a step for carrying out the actual process if it is determined to apply an electrolyte solution in the step (S600) of determining whether to apply an electrolyte solution.

Specifically, if it is determined to apply the electrolyte solution, the method for manufacturing a secondary battery of the present disclosure may further comprise: forming the electrode layer on the current collector, applying the electrolyte solution onto the electrode layer, waiting for the required time, and curing the electrode layer to which the electrolyte solution has been applied. The step of curing the electrode layer to which the electrolyte solution has been applied is a step of not only impregnating the electrode layer with the electrolyte solution but also preventing the electrolyte solution from migrating to other locations. In the curing step, the electrolyte solution changes from a liquid to a gel.

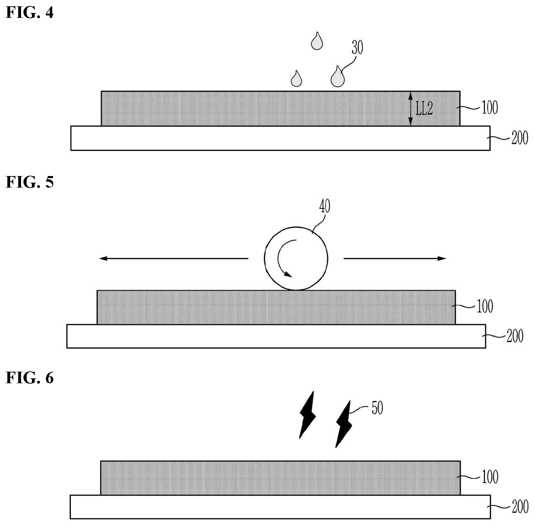

FIGS. 4 and 5 illustrate a step of applying an electrolyte solution to an electrode layer according to an embodiment of the present disclosure.

Referring to FIG. 4, the step of forming an electrode layer on the current collector is a step of forming an electrode layer 100 on the current collector 200 using the slurry used in FIG. 2. The thickness LL2 of the electrode layer 100 formed on the current collector 200 has the same first thickness as the thickness LL1 of the electrode layer 10 formed on the substrate 20 in FIG. 2.

Meanwhile, the current collector 200 is not particularly limited as long as it has high conductivity without causing any chemical changes in a battery, and for example, copper, stainless steel, aluminum, nickel, titanium, fired carbon, or copper or stainless steel whose surface is treated with carbon, nickel, titanium, silver, or the like, an aluminum-cadmium alloy, or the like may be used. Additionally, the thickness of the current collector 200 may be 3 *µ*m or more and 50 *µ*m or less, and preferably 10 *µ*m or more and 20 *µ*m or less. The current collector 200 may be used in various forms such as a film, a sheet, a foil, a net, a porous body, a foaming body, and a non-woven fabric structure.

The step of applying the electrolyte solution onto the electrode layer is a step of applying the electrolyte solution 30 used in FIG. 2 onto the electrode layer 100.

Referring to FIG. 5, the step of applying the electrolyte solution onto the electrode layer may comprise a step of rolling the surface of the electrode layer 100 with a roller 40. As the electrode layer 100 is rolled with the roller 40, the applied electrolyte solution 30 (see FIG. 4) can be evenly dispersed over the surface of the electrode layer 10. Specifically, the entire surface of the electrode layer 100 may be rolled with the roller 40 approximately one to three times. However, the step of rolling the surface of the electrode layer 100 with the roller 40 may be omitted. Specifically, this step may be either carried out or omitted, in the same manner as whether or not the rolling step is carried out, in the step (S400) of applying the electrolyte solution onto the electrode layer described above.

Subsequently, a step of waiting for the required time is carried out. The required time is the time measured in the step (S500) of measuring the required time. During the required time, the electrolyte solution 30 passes through the electrode layer 100 and reaches the current collector 200, completely impregnating the electrode layer 100.

Subsequently, a step of curing the electrode layer to which the electrolyte solution has been applied is carried out.

FIG. 6 illustrates a step of curing the electrode layer to which the electrolyte solution has been applied according to an embodiment of the present disclosure.

Referring to FIGS. 4 and 6 together, after the required time has elapsed, a step of curing the electrode layer 100 coated with the electrolyte solution 30 is carried out. Curing 50 may be carried out by thermal curing or UV curing. Conventionally, the electrolyte solution was injected into the battery case containing the electrode assembly and then stored for 2-3 days for impregnation. However, in the present disclosure, it takes less than 60 seconds for the electrolyte solution 30 to impregnate into the electrode 100, and thereafter the manufacture of the battery can be completed through curing 50. As such, in the method for manufacturing a secondary battery of the present disclosure, the electrolyte solution 30 is applied and impregnated into the electrode layer 100 and then the curing is carried out. Therefore, it is important to accurately measure the impregnation time of the electrolyte solution 30 for designing the curing point of time.

The method for manufacturing a secondary battery of the present disclosure can reflect the structure of applying, impregnating, and curing an electrolyte solution to an electrode in the actual manufacture of a secondary battery, and directly apply the electrolyte solution to the electrode in a semi-finished state, thereby measuring the impregnation time of the electrolyte solution and evaluating the impregnation property of the electrolyte solution. Further, as the impregnation property of the electrolyte solution is evaluated in advance, it is possible to select the electrolyte solution and design the composition and structure of the electrode layer for an appropriate required time. Thereby, the method for manufacturing a secondary battery of the present disclosure can improve reliability and productivity.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

10: electrode layer
20: substrate
30: electrolyte solution
100: electrode layer
200: current collector
40: roller
50: curing

## Claims

1. A method for manufacturing a secondary battery, the method comprising the steps of:
providing a slurry containing an active material;
applying the slurry onto a substrate, drying and rolling it to form an electrode layer having a first thickness;
preparing an electrolyte solution;
applying the electrolyte solution to the electrode layer;
measuring the time required from the point of time when the electrolyte solution is dropped onto the electrode layer to the point of time when the electrolyte solution passes through the electrode layer and appears on the substrate; and
determining whether or not to apply the electrolyte solution, taking into consideration the required time, when the electrode layer having the first thickness is formed on a current collector using the slurry to apply and cure the electrolyte solution thereto.

2. The method for manufacturing a secondary battery according to claim 1,
wherein the determining step is determining to apply the electrolyte solution if the required time is within 30 minutes, and determining not to apply the electrolyte solution if the required time exceeds 30 minutes.

3. The method for manufacturing a secondary battery according to claim 1,
wherein if it is determined to apply the electrolyte solution in the step of determining whether to apply the electrolyte solution, the method comprises:
forming the electrode layer having the first thickness on the current collector using the slurry;
applying the electrolyte solution onto the electrode layer;
waiting for the required time; and
curing the electrode layer to which the electrolyte solution has been applied.

4. The method for manufacturing a secondary battery according to claim 1,
wherein the step of measuring the required time further comprises calculating the impregnation speed of the electrolyte solution using the following Equation 1: $Impregnation speed \left(μm/sec\right) = Electrode layer thickness \left(μm\right) / Required time \left(sec\right) .$

5. The method for manufacturing a secondary battery according to claim 1,
wherein the substrate is a transparent substrate.

6. The method for manufacturing a secondary battery according to claim 1,
wherein the substrate comprises polypropylene (PP) or polyethylene (PE).

7. The method for manufacturing a secondary battery according to claim 1,
wherein the step of applying the electrolyte solution to the electrode layer comprises rolling a surface of the electrode layer with a roller.

8. The method for manufacturing a secondary battery according to claim 3,
wherein the curing step utilizes a UV curing or a thermal curing.

9. The method for manufacturing a secondary battery according to claim 1,
wherein the electrolyte solution is non-volatile.

10. The method for manufacturing a secondary battery according to claim 1,
wherein the electrolyte solution is a liquid electrolyte.

11. The method for manufacturing a secondary battery according to claim 1,
wherein the slurry comprises a positive electrode active material, a binder, and a conductive material.

12. The method for manufacturing a secondary battery according to claim 1,
wherein the slurry comprises a negative electrode active material, a binder, and a conductive material.

13. The method for manufacturing a secondary battery according to claim 1,
wherein the first thickness is 10 *µ*m or more and 1000 *µ*m or less.
